# EUROPEAN PATENT SPECIFICATION

(11) **EP 2 900 765 B1**
(45) Date of publication and mention of the grant of the patent: **31.08.2016**
(21) Application number: 13767186.3
(22) Date of filing: 12.09.2013
(51) Int. Cl.: C09D 1/00, C09D 5/00

(54) **COATABLE COMPOSITION, ANTIMICROBIAL COMPOSITION, ANTIMICROBIAL ARTICLES, AND METHODS OF MAKING THE SAME**
BESCHICHTUNGSZUSAMMENSETZUNG, ANTIMIKROBIELLE ZUSAMMENSETZUNG, ANTIMIKROBIELLE ARTIKEL UND VERFAHREN ZUR HERSTELLUNG DAVON
COMPOSITION DE REVÊTEMENT, COMPOSITION ANTIMICROBIENNE, ARTICLES ANTIMICROBIENS ET LEURS PROCÉDÉS DE FABRICATION

(30) Priority: 26.09.2012 US 201261705927 P
(43) Date of publication of application: 05.08.2015
(73) Proprietor: 3M Innovative Properties Company, St. Paul, MN 55133-3427 (US); Jing, Naiyong, Saint Paul, Minnesota 55133-3427 (US); Riddle, Justin A., Saint Paul, Minnesota 55133-3427 (US); Jiang, Xuan, Saint Paul, Minnesota 55133-3427 (US); Stepanova, Narina Y., Saint Paul, Minnesota 55133-3427 (US); Strerath, Christiane, 41453 Neuss (DE); Sun, Fuxia, Saint Paul, Minnesota 55133-3427 (US); Chen, Xue-Hua, Shanghai 200336 (CN)
(72) Inventor: JING, Naiyong, Saint Paul, Minnesota 55133-3427 (US); RIDDLE, Justin A., Saint Paul, Minnesota 55133-3427 (US); JIANG, Xuan, Saint Paul, Minnesota 55133-3427 (US); STEPANOVA, Narina Y., Saint Paul, Minnesota 55133-3427 (US); STRERATH, Christiane, D-41453 Neuss (DE); SUN, Fuxia, Saint Paul, Minnesota 55133-3427 (US); CHEN, Xue-hua, Shanghai 200336 (CN)
(74) Representative: Herzog, Fiesser & Partner Patentanwälte PartG mbB
(86) International application number: PCT/US2013/059411
(87) International publication number: WO 2014/052022

(56) References cited:
- EP-A1- 0 444 939
- WO-A1-2010/068275
- WO-A2-2009/046081
- WO-A2-2010/030552

## Description

### TECHNICAL FIELD

The present disclosure broadly relates to compositions and articles having antimicrobial properties, and methods of making them.

### BACKGROUND

The potential for the presence of pathogenic bacteria and viruses in biological fluids such as saliva, tears, blood, and lymph is of significant concern as is the potential for the transfer of such microorganisms to the surfaces of medical devices (and vice versa). For these reasons, methods for minimizing the transmission of pathogens in the home and in hospitals, as well as in daycare centers, are important.

Microorganisms (e.g., viruses, bacteria, fungi) can be killed or rendered static by a number of physical and chemical methods. Physical methods include heat and radiation. There are a number of chemicals that have been used to limit viral, fungal, and bacterial growth. Examples include alcohols (usually as 70% by volume aqueous ethyl- or isopropyl alcohol), phenol (carbolic acid) and phenol derivatives such as hexachlorophene, formaldehyde, glutaraldehyde, ethylene oxide, ether, detergents, chlorhexidine gluconate, heavy metals such as silver, copper, and mercury, organic compounds of mercury such as mercurochrome, oxidizing agents such as hydrogen peroxide, iodine, hypochlorite, and chlorine. A number of antiviral agents are also known, including amantadine, nucleoside analogs such as AZT, aciclovir, ganciclovir, and vidarabine.

Silver compounds are known to impart antimicrobial effects to a surface with minimal risk of developing bacterial resistance. Silver is delivered to the surface by sustained release of silver cations from the surface when in contact with moist environments, such as a wound bed. Silver compositions, such as silver nitrate and silver sulfadiazine, are effective antimicrobials used in a variety of applications. However, they are typically not light-stable, leave a stain on skin with which they come into contact, and in the case of silver nitrate, may be quickly depleted in an aqueous environment.

### SUMMARY

The subject-matter of the present invention is destined in claims 1-15 as attached.

In one aspect, the present disclosure provides a method of making a coatable composition, the method comprising:
providing a first composition comprising silica nanoparticles dispersed in an aqueous liquid vehicle, wherein the silica nanoparticles have a mean particle size of less than or equal to 45 nanometers, and wherein the first composition has a pH greater than 6;
acidifying the first composition to a pH of less than or equal to 4 using inorganic acid to provide a second composition; and
dissolving at least one metal compound in the second composition to provide the coatable composition, wherein said at least one metal compound comprises at least one of a silver compound, a zinc compound, or a copper compound.

In another aspect, the present disclosure provides a coatable composition made according to the foregoing method of the present disclosure.

Antimicrobial compositions according to the present disclosure are useful, for example, for making antimicrobial articles.

In yet another aspect, the present disclosure provides a method of making an antimicrobial article, the method comprising steps:
a) providing a first composition comprising silica nanoparticles dispersed in an aqueous liquid vehicle, wherein the silica nanoparticles have a particle size distribution with a mode having a mean particle size of less than or equal to 45 nanometers, and wherein the first composition has a pH greater than 6;
b) acidifying the first composition to a pH of less than or equal to 4 using inorganic acid to provide a second composition; and
c) dissolving at least one metal compound in the second composition to provide a coatable composition, wherein said at least one metal compound comprises at least one of a silver compound, a zinc compound, or a copper compound; and
d) coating a layer of the coatable composition onto a surface of a substrate; and
e) at least partially drying the layer of the coatable composition to form an antimicrobial layer disposed on the surface of the substrate.

In yet another aspect, the present disclosure provides an antimicrobial article made according to the foregoing method of the present disclosure.

In yet another aspect, the present disclosure provides an antimicrobial composition comprising an amorphous silica matrix containing metal cations; wherein the amorphous silica matrix comprises interconnected silica nanoparticles; wherein a majority of the metal cations are individually disposed in the amorphous silica matrix; wherein the metal cations comprise at least one of silver cations, zinc cations, or copper cations; and wherein the metal cations comprise from 0.5 to 20 mole percent of the total combined moles of the metal cations and silicon in the amorphous antimicrobial composition.

In yet another aspect, the present disclosure provides an antimicrobial article comprising a layer of an amorphous antimicrobial composition disposed on a surface of a substrate, wherein the amorphous antimicrobial composition comprises a silica matrix containing metal cations, wherein the silica matrix comprises interconnected silica nanoparticles having a particle size distribution with an average particle size of less than or equal to 100 nanometers, wherein the metal cations have a charge of n+, wherein n represents an integer ≥ 2, wherein a majority of the metal cations are individually disposed in the silica matrix, and wherein the metal cations comprise from 0.5 to 20 mole percent of the total combined moles of the metal cations and silicon in the amorphous antimicrobial composition.

Advantageously, antimicrobial articles according to the present disclosure exhibit good antimicrobial efficacy and are resistant to leaching. In those embodiments wherein the layer of the antimicrobial composition thickness is in a range of a quarter of wavelength at a desired of a wavelength range, the layer of antimicrobial composition may be optically clear and antireflective, as well.

As used herein:
the term "antimicrobial" means capable of resisting growth of microorganisms (e.g., bacteria and/or fungi);
the term "dispersion of silica nanoparticles" refers to a dispersion wherein individual silica nanoparticles are dispersed, and does not refer to a dispersion of fumed silica, which has sintered primary silica particles aggregated into chains;
the term "essentially free of " means containing less than one by percent by weight of, typically less than 0.1 percent by weight of, and more typically less than 0.01 percent by weight of;
the term "essentially free of non-volatile organic compounds" means containing less than one percent by weight of organic compounds having a boiling point above 150° Celsius at 1 atmosphere (100 kPa) of pressure;
the term "individually disposed in the amorphous silica matrix" in reference to metal cations means that the metal cations are bound through oxygen to silicon, and are not present as a discrete metal phase;
the term "nanoparticle" refers to a particle having a particle size of from 1 to 200 nanometers;
the term "organic compound" refers to any compound containing at least one carbon-carbon and/or carbon-hydrogen bond; and
the term "silica", used in reference to silica nanoparticles and silica sols, refers to a compound represented by the formula SiO₂·nH₂O, wherein n is a number greater than or equal to zero.

Features and advantages of the present disclosure will be further understood upon consideration of the detailed description as well as the appended claims.

### BRIEF DESCRIPTION OF THE DRAWINGS

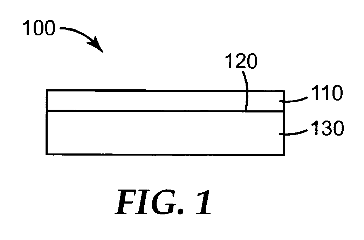

FIG. 1 is a schematic side view of an exemplary antimicrobial article 100 according to the present disclosure.

It should be understood that numerous other modifications and embodiments can be devised by those skilled in the art, which fall within the scope and spirit of the principles of the disclosure. The figure may not be drawn to scale.

### DETAILED DESCRIPTION

The initial composition comprises silica nanoparticles dispersed in an aqueous liquid medium, wherein the silica nanoparticles have a particle size distribution with an average particle size of less than or equal to 40 nanometers, and wherein the initial composition has a pH greater than 6.

The silica nanoparticles have an average particle size of less than or equal to 40 nanometers (nm). In some embodiments, the silica nanoparticles have an average particle size of less than or equal to 35 nm, less than or equal to 30 nm, less than or equal to 25 nm, less than or equal to 20 nm, less than or equal to 15 nm, or even less than 10 nm. Typically, the silica nanoparticles have an average particle size of at least 4 nm, although this is not a requirement. The average primary particle size may be determined, for example, using transmission electron microscopy. As used herein, the term "particle size" refers to the longest dimension of a particle, which is the diameter for a spherical particle.

Of course, silica particles with a particle size greater than 200 nm (e.g., up to 2 micrometers in particle size) may also be included, but typically in a minor amount.

The silica nanoparticles desirably have narrow particle size distributions; for example, a polydispersity of 2.0 or less, or even 1.5 or less. In some embodiments, the silica nanoparticles have a surface area greater than 150 square meters per gram (m²/g), greater than 200 m²/g, or even greater than 400 m²/g.

In some embodiments, the amount of the silica nanoparticles having an average particle size (e.g., diameter) of 40 nm or less is at least 0.1 percent by weight, and desirably at least 0.2 percent by weight, based on the total weight of the initial composition and/or coatable composition. In some embodiments, the concentration of the silica nanoparticles having a particle size (e.g., diameter) of 40 nm or less is no greater than 20 percent by weight, or even no greater than 15 percent by weight, based on the total weight of the initial composition.

The silica nanoparticles may have a polymodal particle size distribution. For example, a polymodal particle size distribution may have a first mode with a particles size in the range of from 5 to 45 nanometers, preferably 20 to 45 nanometers, and a second mode having a second particle size in the range of from 1 to 10 nanometers, preferably 2 to 20 nanometers.

Nanoparticles (e.g., silica nanoparticles) included in the initial composition can be spherical or non-spherical with any desired aspect ratio. Aspect ratio refers to the ratio of the average longest dimension of the nanoparticles to their average shortest dimension. The aspect ratio of non-spherical nanoparticles is often at least 2:1, at least 3:1, at least 5:1, or at least 10:1. Non-spherical nanoparticles may, for example, have the shape of rods, ellipsoids, and/or needles. The shape of the nanoparticles can be regular or irregular. The porosity of coatings can typically be varied by changing the amount of regular and irregular-shaped nanoparticles in the coatable composition and/or by changing the amount of spherical and non-spherical nanoparticles in the coatable composition.

In some embodiments, the total weight of the silica nanoparticles in the initial composition is at least 0.1 percent by weight, typically at least 1 percent by weight, and more typically at least 2 percent by weight. In some embodiments, the total weight of the silica nanoparticles in the composition is no greater than 40 percent by weight, desirably no greater than 10 percent by weight, and more typically no greater than 7 percent by weight.

Silica sols, which are stable dispersions of silica nanoparticles in aqueous liquid media, are well-known in the art and available commercially. Non-aqueous silica sols (also called silica organosols) may also be used and are silica sol dispersions wherein the liquid phase is an organic solvent, or an aqueous mixture containing an organic solvent. In the practice of this disclosure, the silica sol is chosen so that its liquid phase is compatible with the dispersion, and is typically an aqueous solvent, optionally including an organic solvent. Typically, the initial composition does not include, or is essentially free of, fumed silica, although this is not a requirement.

Silica nanoparticle dispersions (e.g., silica sols) in water or water-alcohol solutions are available commercially, for example, under such trade names as LUDOX (marketed by E. I. du Pont de Nemours and Co., Wilmington, Delaware), NYACOL (marketed by Nyacol Co., Ashland, Massachusetts), and NALCO (manufactured by Ondea Nalco Chemical Co., Oak Brook, Illinois). One useful silica sol is NALCO 2326, which is available as a silica sol with an average particle size of 5 nanometers, pH = 10.5, and solid content 15 percent solids by weight. Other commercially available silica nanoparticles include those available under the trade designations NALCO 1115 (spherical, average particle size of 4 nm, 15 percent solids by weight dispersion, pH = 10.4), NALCO 1130 spherical dispersion, average particle size of 8 nm, 30 percent solids by weight dispersion, pH = 10.2), NALCO 1050 (spherical, average particle size 20 nm, 50 percent solids by weight dispersion, pH = 9.0), NALCO 2327 (spherical, average particle size of 20 nm, 40 percent solids by weight dispersion, pH = 9.3), NALCO 1030 (spherical, average particle size of 13 nm, 30 percent solids by weight dispersion, pH = 10.2).

Acicular silica nanoparticles may also be used provided that the average silica nanoparticle size constraints described hereinabove are achieved.

Useful acicular silica nanoparticles may be obtained as an aqueous suspension under the trade name SNOWTEX-UP and SNOWTEX-OUP by Nissan Chemical Industries (Tokyo, Japan). The mixture consists of 20-21 % (w/w) of acicular silica, less than 0.35% (w/w) of Na₂O, and water. The particles are about 9 to 15 nanometers in diameter and have lengths of 40 to 200 nanometers. The suspension has a viscosity of <100 mPa at 25°C, a pH of about 9 to 10.5, and a specific gravity of about 1.13 at 20°C.

Other useful acicular silica nanoparticles may be obtained as an aqueous suspension under the trade name SNOWTEX-PS-S and SNOWTEX-PS-M by Nissan Chemical Industries, having a morphology of a string of pearls. The mixture consists of 20-21 % (w/w) of silica, less than 0.2% (w/w) of Na₂O, and water. The SNOWTEX-PS-M particles are about 18 to 25 nanometers in diameter and have lengths of 80 to 150 nanometers. The particle size is 80 to 150 by dynamic light scattering methods. The suspension has a viscosity of <100 mPas at 25°C, a pH of about 9 to 10.5, and a specific gravity of about 1.13 at 20°C. The SNOWTEX-PS-S has a particle diameter of 10-15 nm and a length of 80-120 nm.

Low- and non-aqueous silica sols (also called silica organosols) may also be used and are silica sol dispersions wherein the liquid phase is an organic solvent, or an aqueous organic solvent. In the practice of the present disclosure, the silica nanoparticle sol is chosen so that its liquid phase is compatible with the intended coating composition, and is typically aqueous or a low-aqueous organic solvent.

Silica sols having a pH of at least 8 can also be prepared according to the methods described in U.S. Patent No. 5,964,693 (Brekau et al.).

Optionally, the initial composition can further include other nanoparticles, including, for example, nanoparticles comprising aluminum oxide, titanium oxide, tin oxide, antimony oxide, antimony-doped tin oxide, indium oxide, tin-doped indium oxide, or zinc oxide.

The initial composition has a pH greater than 6, more typically greater than 7, more typically greater than 8, and even more typically greater than 9.

In some embodiments, the initial composition is essentially free of non-volatile organic compounds. In some embodiments, the initial composition is essentially free of organic surfactants.

The aqueous liquid medium of the initial composition may comprise (in addition to water) at least one volatile organic solvent. Examples of suitable volatile organic solvents include those volatile organic solvents that are miscible with water such as, e.g., methanol, ethanol, isopropanol, and combinations thereof. However, for many applications, reduction or elimination of volatile organic compounds will be desirable, and advantageously the present disclosure may be practiced using initial compositions and/or coatable compositions that are essentially free of volatile organic solvent.

The initial composition is acidified by addition of inorganic acid until it has a pH of less than or equal to 4, typically less than 3, or even less than 2 thereby providing the coatable composition. Useful inorganic acids (i.e., mineral acids) include, for example, hydrochloric acid, nitric acid, sulfuric acid, phosphoric acid, perchloric acid, chloric acid, and combinations thereof. Typically, the inorganic acid is selected such that it has a pKₐ of less than or equal to two, less than one, or even less than zero, although this is not a requirement. Without wishing to be bound by theory, the present inventors believe that some agglomeration of the silica nanoparticles occurs as the pH falls, resulting in a dispersion comprising slightly agglomerated nanoparticles.

At this stage, at least one silver, zinc, and/or copper compound, and optionally at least one other metal compound (e.g., a titanium compound or other metal compound) is combined with (e.g., dissolved in) the acidified composition thereby providing the coatable composition, generally with mixing. Combination of the various ingredients in the above compositions may be carried out using any suitable mixing technique. Examples include stirring, shaking, and otherwise agitating the composition during or after addition of all components of the composition.

Useful silver compounds include, for example, silver nitrate (i.e., AgNO₃ and hydrates thereof. Examples of copper compounds include copper sulfate (i.e., CuSO₄) and hydrates thereof. Examples of zinc compounds include zinc nitrate (i.e., Zn(NO₃)₂) and hydrates thereof.

In addition to any silver compounds, copper compounds, or zinc compounds, additional metal compounds may optionally be included in compositions and articles according to the present disclosure. Optional metal compound(s) (and any metal cations contained therein) may comprise a metal (or metal cation) in any of groups 2 through 15 (e.g., group 2, group 3, group 4, group 5, group 6, group 7, group 8, group 9, group 10, group 11, group 12, group 13, group 14, group 15, and combinations thereof) of the Periodic Table of the Elements.

Metal cations contained in the optional metal compound(s) may have a charge of n+, wherein n represents an integer ≥ 2 (e.g., 2, 3, 4, 5, or 6), for example. The metal compounds should have sufficient solubility in water to achieve the desired level of metal incorporation in the resultant soil-resistant composition. For example, the metal compound(s) may comprise metal salt(s). Examples of useful optional metal compounds include platinum compounds (e.g., H₂PtCl₆), aluminum compounds (e.g., Al(NO₃)₃), zirconium compounds(e.g., ZrCl₄ or ZrOCl₂·8H₂O), calcium compounds (e.g., CaCl₂), magnesium compounds (e.g., MgCl₂), titanium compounds (e.g., TiOSO₄·2H₂O), iron compounds (e.g., FeCl₃), tin compounds (e.g., SnCl₂ and SnCl₄·5H₂O), manganese compounds, and combinations thereof. In some embodiments, the coatable composition is essentially free of alkali metal and/or alkaline earth cations.

Coatable compositions according to the present disclosure may further comprise one or more optional additives such as, for example, colorant(s), surfactant(s), thickener(s), thixotrope(s), or leveling aid(s). Optional other ingredients

In some embodiments, the coatable composition may comprise an added surfactant, however, the inventors have unexpected discovered that coatable compositions according to the present disclosure wet out at least some hydrophobic surfaces without added surfactant.

The solids in the coatable composition may comprise from 30 to 99 percent by weight of silica, desirably from 60 to 97.5 percent by weight of silica, more desirably from 80 to 95 percent by weight of silica, although other amounts may also be used.

Similarly, the coatable composition may comprise the metal cations in an amount of from 0.2 to 20 mole percent (desirably from 0.5 to 10 mole percent, more desirably from 2 to 5 mole percent) of the total combined moles of silicon and the metal cations (e.g., having a positive charge of at least 2) contained in the metal compound(s), although other amounts may also be used.

Once made, the coating composition is typically stable over long periods of time, over a range of temperatures, although this is not a requirement. The coating composition may be coated onto a substrate and at least partially dried, typically substantially completely dried.

Without wishing to be bound by theory, the present inventors believe that during the drying process, condensation processes lead to chemical bonding between the silica nanoparticles and/or agglomerates at points of contact to form a silica matrix. Metal cations may be individually incorporated into the silica matrix, resulting in an amorphous composition.

The coatable composition can be contacted with a surface of a substrate and at least partially dried to form an antimicrobial coated article. Unexpectedly, the present inventors have discovered that coatable compositions according to the present disclosure can be contacted with a surface of a substrate and at least partially dried to provide a defect-free layer with unexpected antimicrobial properties. Suitable methods of drying the coatable composition include, for example, evaporation in air at about room temperature, ovens, heated air blowers, infrared heaters, and hot cans. Drying is typically carried out until the coatable composition is substantially completely dry, although this is not a requirement. Once contacted with the substrate and at least partially dried, the antimicrobial layer may be aged for a period of time such as for example, at least 1 hour (hr), at least 4 hrs, at least 8 hrs, at least 24 hrs, at least 72 hrs, at least 1 week, or even at least 2 weeks, during which time the soil-resistance of the antimicrobial layer may improve.

Referring now to FIG. 1, antimicrobial article 100 comprises antimicrobial layer 110 disposed on surface 120 of substrate 130. Examples of suitable methods of contact the coatable composition with the surface of the substrate include roll coating, spray coating, gravure coating, dip coating, and curtain coating. Typically, the antimicrobial layer has a thickness in the range of from 0.02 to 100 microns, desirably 0.05 to 5 microns, although this is not a requirement.

Typically, antimicrobial layers according to the present disclosure are at least substantially transparent; however this is not a requirement.

Examples of suitable substrates include virtually any dimensionally-stable material. Examples include glass substrates (e.g., mirrors, windows, windshields, tables, lenses, and prisms), metal substrates, ceramic substrates, organic polymer substrates (e.g., molded polymer articles, automotive paints and clearcoats, polymer films, retroreflective sheeting, indoor signage, and outdoor signage), and fabric (e.g., upholstery fabric). In some embodiments, the substrate comprises at least one of glass or an organic polymer. In some embodiments, the organic polymer comprises at least one of a polyester (e.g., polyethylene terephthalate or polybutylene terephthalate), polycarbonate, allyldiglycol carbonate, acrylics (e.g., polymethyl methacrylate (PMMA)), polystyrene, polysulfone, polyether sulfone, homo-epoxy polymers, epoxy addition polymers with polydiamines and/or polydithiols, polyamides (e.g., nylon 6 and nylon 6,6), polyimides, polyolefins (e.g., polyethylene and polypropylene), olefinic copolymers (e.g., polyethylene copolymers), and cellulose esters (e.g., cellulose acetate and cellulose butyrate), and combinations thereof.

### SELECT EMBODIMENTS OF THE PRESENT DISCLOSURE

In a first embodiment, the present disclosure provides a method of making a coatable composition, the method comprising:
providing a first composition comprising silica nanoparticles dispersed in an aqueous liquid vehicle, wherein the silica nanoparticles have a mean particle size of less than or equal to 45 nanometers, and wherein the first composition has a pH greater than 6;
acidifying the first composition to a pH of less than or equal to 4 using inorganic acid to provide a second composition; and
dissolving at least one metal compound in the second composition to provide the coatable composition, wherein said at least one metal compound comprises at least one of a silver compound, a zinc compound, or a copper compound.

In a second embodiment, the present disclosure provides a method according to the first embodiment, wherein said at least one metal compound comprises a zinc compound and at least one of a silver compound or a copper compound.

In a third embodiment, the present disclosure provides a method according to the first or second embodiment, wherein the coatable composition is essentially free of organic non-volatile compounds.

In a fourth embodiment, the present disclosure provides a coatable composition made according to any one of the first to third embodiments.

In a fifth embodiment, the present disclosure provides a method of making an antimicrobial article, the method comprising steps:
a) providing a first composition comprising silica nanoparticles dispersed in an aqueous liquid vehicle, wherein the silica nanoparticles have a particle size distribution with a mode having a mean particle size of less than or equal to 45 nanometers, and wherein the first composition has a pH greater than 6;
b) acidifying the first composition to a pH of less than or equal to 4 using inorganic acid to provide a second composition; and
c) dissolving at least one metal compound in the second composition to provide a coatable composition, wherein said at least one metal compound comprises at least one of a silver compound, a zinc compound, or a copper compound; and
d) coating a layer of the coatable composition onto a surface of a substrate; and
e) at least partially drying the layer of the coatable composition to form an antimicrobial layer disposed on the surface of the substrate.

In a sixth embodiment, the present disclosure provides a method according to the fifth embodiment, wherein said at least one metal compound comprises a zinc compound and at least one of a silver compound or a copper compound.

In a seventh embodiment, the present disclosure provides a method according to the fifth or sixth embodiment, wherein the substrate comprises at least one of glass or an organic polymer.

In an eighth embodiment, the present disclosure provides a method according to any one of the fifth to seventh embodiments, wherein the layer of the coatable composition is optically clear.

In a ninth embodiment, the present disclosure provides a method according to any one of the fifth to eighth embodiments, wherein the layer of the coatable composition has a thickness in a range of from 0.02 to 100 microns.

In a tenth embodiment, the present disclosure provides a method according to any one of the fifth to ninth embodiments, wherein the inorganic acid has a pKₐ of less than or equal to zero.

In an eleventh embodiment, the present disclosure provides a method according to any one of the fifth to tenth embodiments, wherein step b) comprises acidifying the first composition to a pH of less than or equal to 2.

In a twelfth embodiment, the present disclosure provides a method according to any one of the fifth to eleventh embodiments, wherein the silica nanoparticles have a mean particle size of less than or equal to 20 nanometers.

In a thirteenth embodiment, the present disclosure provides a method according to any one of the fifth to twelfth embodiments, wherein the coatable composition is essentially free of organic non-volatile compounds.

In a fourteenth embodiment, the present disclosure provides an antimicrobial article made according to any one of the fifth to thirteenth embodiments.

In a fifteenth embodiment, the present disclosure provides an antimicrobial composition comprising an amorphous silica matrix containing metal cations; wherein the amorphous silica matrix comprises interconnected silica nanoparticles; wherein a majority of the metal cations are individually disposed in the amorphous silica matrix; wherein the metal cations comprise at least one of silver cations, zinc cations, or copper cations; and wherein the metal cations comprise from 0.5 to 20 mole percent of the total combined moles of the metal cations and silicon in the amorphous antimicrobial composition.

In a sixteenth embodiment, the present disclosure provides an antimicrobial composition according to the fifteenth embodiment, wherein the antimicrobial composition is essentially free of organic non-volatile compounds.

In a seventeenth embodiment, the present disclosure provides an antimicrobial composition according to the fifteenth or sixteenth embodiment, wherein said at least one metal compound comprises a zinc compound and at least one of a silver compound or a copper compound.

In an eighteenth embodiment, the present disclosure provides an antimicrobial article comprising a layer of an amorphous antimicrobial composition disposed on a surface of a substrate, wherein the amorphous antimicrobial composition comprises a silica matrix containing metal cations, wherein the silica matrix comprises interconnected silica nanoparticles having a particle size distribution with an average particle size of less than or equal to 100 nanometers, wherein the metal cations have a charge of n+, wherein n represents an integer ≥ 2, wherein a majority of the metal cations are individually disposed in the silica matrix, and wherein the metal cations comprise from 0.5 to 20 mole percent of the total combined moles of the metal cations and silicon in the amorphous antimicrobial composition.

In a nineteenth embodiment, the present disclosure provides an antimicrobial article according to the eighteenth embodiment, wherein said at least one metal compound comprises a zinc compound and at least one of a silver compound or a copper compound.

In a twentieth embodiment, the present disclosure provides an antimicrobial composition according to the eighteenth or nineteenth embodiment, wherein the substrate comprises at least one of glass or an organic polymer.

In a twenty-first embodiment, the present disclosure provides an antimicrobial composition according to any one of the eighteenth to twentieth embodiments, wherein the layer of the coatable composition is optically clear.

In a twenty-second embodiment, the present disclosure provides an antimicrobial composition according to any one of the eighteenth to twenty-first embodiments, wherein the layer of the amorphous antimicrobial composition is essentially free of organic non-volatile compounds.

Objects and advantages of this disclosure are further illustrated by the following non-limiting examples, but the particular materials and amounts thereof recited in these examples, as well as other ccnditions and details, should not be construed to unduly limit this disclosure.

### EXAMPLES

Unless otherwise noted, all parts, percentages, ratios, etc. in the Examples are by weight. In the Examples, "minute(s)" is abbreviated as "min", and "hour(s)" is abbreviated as "hr(s)". In the Tables, "NM" means "not measured", and "CFU/mL" refers to "colony-forming units per milliliter."

### MATERIALS:

NALCO 1115 is a colloidal silica dispersion obtained from Nalco Company, Naperville, Illinois, under the trade designation NALCO 1115 colloidal silica.
NALCO DVNZ004 is an amorphous silica dispersion obtained from Nalco Company under the trade designation, NALCO DVNZ004 CATALYST SUPPORT.
AgNO₃ was obtained from Sigma-Aldrich Co., Saint Louis, Missouri.
Cu(NO₃)_{2·}3H₂O was obtained from Sigma-Aldrich Co.
Zn(OAc)₂·2H₂O (zinc diacetate dihydrate) was obtained from Sigma-Aldrich Co.
CuSO₄·5H₂O was obtained from Sigma-Aldrich Co.
Na₂B₄O₇·10H₂O (hereinafter "borate") was obtained from Sigma-Aldrich Co.

### TEST METHOD FOR MEASURING THE ANTIBACTERIAL ACTIVITY

The samples prepared according to the Examples described below were evaluated for antibacterial activity of antibacterial of coatings using the JIS Z 2801 test method (Japan Industrial Standards; Japanese Standards Association; Tokyo, Japan) was used to evaluate the antibacterial activity of antibacterial of coatings. The bacterial inoculum was prepared to a concentration of approximately 1x10⁶ CFU/ml in a solution of 1 part Trypticase Soy Broth (TSB) (BBL, Becton, Dickinson and Company, Sparks, MD), and 499 parts phosphate buffer (0.3 mM KH₂PO₄). Samples were cut in 1 x 1-inch (2.54 cm x 2.54 cm) square. A portion of the bacterial suspension (150ul) was placed onto the surface of the sample and the inoculated sample was incubated for the specified contact time at 27+/-1°C. After incubation, the sample was placed into 20 mL of Dey/Engley (D/E) Neutralizing Broth (Difco, Becton, Dickinson and Company, Sparks, Maryland). The number of surviving bacteria in the Neutralizing broth was determined by serially diluting and plating on Aerobic Count (AC) Petrifilm (3M Company, St. Paul, Minnesota). The plates were incubated for 48 hours at 35°C ± 1°C. Bacterial colonies from appropriate dilution were counted according to the manufacturer's instructions and recorded as colony-forming units (CFU) per cm².

Films with Ag-nanosilica showed an excellent reduction for both gram positive (*Staphylococcus aureus* ATCC 6538) and gram negative (*Pseudomonas aeruginosa* ATCC 9027) organisms with increasing activity with thicker coatings.

Data presented (as Log reduction in bacterial count) in the Tables below represents the reduction of the bacterial population in comparison to a control substrate without the coating.

### KIRBY-BAUER TEST

The samples prepared for Examples described below were tested using the Kirby-Bauer test to determine their sensitivity or resistance of bacteria to antimicrobial leaching compounds. For this test, the microorganisms were grown on Mueller-Hinton agar in the presence of antimicrobial impregnated into a disk of agar. The presence or absence of a zone around the discs was taken as an indirect indicator of migration (i.e., bleaching) of metal compounds in the coating composition.

### EXAMPLES 1-30

Examples 1-30 were prepared by coating metal doped silica dispersions on 50 micrometer thick polyethylene terephthalate films obtained from E.I. du Pont de Nemours and Co., Wilmington, Delaware, under trade designation MELINEX 618 (hereinafter PET) using a with #6 or #12 wire-wound coating rod (from RD Specialties, Webster, New York, nominal wet coating thickness = 14 and 28 microns, respectively). The metal doped colloidal silica dispersions were prepared by diluting NALCO 1115 silica sol to 5 weight percent solids with de-ionized (DI) water, acidifying the diluted silica sol with concentrated HNO₃ to a pH of about 2-3and then adding a desired amount of aqueous metal compound solutions (5 weight percent AgNO₃ or 5 weight percent Cu(NO₃)₂·3H₂O). The type and amount of metal cations added to the coating compositions for each of Examples 1-30 are reported in Tables 1 and 2. The coated samples were then dried at room temp, and then further cured at 120 °C for 10 min. The final coated samples were optically clear and transparent. The samples thus prepared were tested for their antimicrobial activity according to the *TEST METHOD FOR MEASURING THE ANTIBACTERIAL ACTIVITY* described above and the results are reported below in Table 1 and 2. None of Examples 1-12 showed the migration of the metal compounds as judged by the lack of a visible zone of inhibition extending beyond the coated composition in the KIRBY BAUER TEST.

**TABLE 1**

| EXAMPLE | COATED COMPOSITION | | LOG REDUCTION OF *Staphylococcus aureus* | | | |
|---|---|---|---|---|---|---|
| | Metal Compound (weight percent based on total metal compound + silica) | wire-wound coating rod size | 1 hr | 2 hrs | 4 hrs | 24 hrs |
| 1 | AgNO₃ (2.5 wt.%) | 6 | 2.44 | 4.34 | 4.82 | 2.80 |
| 2 | AgNO₃ (2.5 wt.%) | 12 | 2.08 | 4.78 | 4.04 | 5.12 |
| 3 | AgNO₃ (5.0 wt.%) | 6 | 2.45 | 4.23 | 4.82 | 4.68 |
| 4 | AgNO₃ (5.0 wt.%) | 12 | 2.64 | 4.43 | 4.76 | 4.97 |
| 5 | AgNO₃ (10 wt.%) | 6 | 1.71 | 4.54 | 5.06 | 5.27 |
| 6 | AgNO₃ (10 wt.%) | 12 | 4.99 | 4.63 | 4.67 | 5.27 |
| 7 | Cu(NO₃)₂·3H₂O (2.5 wt.%) | 6 | NM | 0.53 | 2.37 | 5.29 |
| 8 | Cu(NO₃)₂·3H₂O (2.5 wt.%) | 12 | NM | 1.24 | 3.87 | 5.29 |
| 9 | Cu(NO₃)₂·3H₂O (5.0 wt.%) | 6 | NM | 0.23 | 2.10 | 5.29 |
| 10 | Cu(NO₃)₂·3H₂O (5.0 wt.%) | 12 | NM | 0.96 | 2.24 | 5.29 |
| 11 | Cu(NO₃)₂·3H₂O (10 wt.%) | 6 | NM | 0.61 | 2.49 | 5.29 |
| 12 | Cu(NO₃)₂·3H₂O (10 wt.%) | 12 | NM | 0.48 | 2.71 | 5.29 |
| 13 | AgNO₃ (3.5 wt.%), Cu(NO₃)₂·3H₂O (1.5 wt.%), | 12 | NM | NM | NM | 5.18 |
| 14 | AgNO₃ (2.5 wt.%), Cu(NO₃)₂·3H₂O (2.5 wt.%), | 12 | NM | NM | NM | 5.18 |
| 15 | AgNO₃ (1.5 wt.%), Cu(NO₃)₂·3H₂O (3.5 wt.%), | 12 | NM | NM | NM | 5.18 |

**TABLE 2**

| EXAMPLE | COATED COMPOSITION | | LOG REDUCTION OF *Pseudomonas aeruginosa* | | | |
|---|---|---|---|---|---|---|
| | Metal Compound (weight percent based on total metal compound + silica) | Wire-wound coating rod size | 1 hr | 2 hrs | 4 hrs | 24 hrs |
| 16 | AgNO₃ (2.5 wt.%) | 6 | 5.33 | 3.47 | 4.70 | 4.19 |
| 17 | AgNO₃ (2.5 wt.%) | 12 | 5.24 | 4.85 | 4.60 | 5.87 |
| 18 | AgNO₃ (5.0 wt.%) | 6 | 4.75 | 4.85 | 4.70 | 4.94 |
| 19 | AgNO₃ (5.0 wt.%) | 12 | 5.24 | 5.00 | 4.64 | 6.11 |
| 20 | AgNO₃ (10 wt.%) | 6 | 5.18 | 4.31 | 4.37 | 4.95 |
| 21 | AgNO₃ (10 wt.%) | 12 | 5.33 | 5.15 | 4.18 | 5.87 |
| 22 | Cu(NO₃)₂·3H₂O (2.5 wt.%) | 6 | 2.26 | 4.74 | NM | 5.66 |
| 23 | Cu(NO₃)₂·3H₂O (2.5 wt.%) | 12 | 3.32 | 4.89 | NM | 5.66 |
| 24 | Cu(NO₃)₂·3H₂O (5.0 wt.%) | 6 | 1.89 | 4.65 | NM | 5.66 |
| 25 | Cu(NO₃)₂·3H₂O (5.0 wt.%) | 12 | 2.57 | 4.89 | NM | 5.66 |
| 26 | Cu(NO₃)₂·3H₂O (10 wt.%) | 6 | 2.16 | 4.74 | NM | 5.66 |
| 27 | Cu(NO₃)₂·3H₂O (10 wt.%) | 12 | 3.21 | 4.74 | NM | 5.66 |
| 28 | AgNO₃ (3.5 wt.%), Cu(NO₃)₂·3H₂O (1.5 wt.%), | | NM | NM | NM | 6.08 |
| 29 | AgNO₃ (2.5 wt.%), Cu(NO₃)₂·3H₂O (2.5 wt.%), | | NM | NM | NM | 6.08 |
| 30 | AgNO₃ (1.5 wt.%), Cu(NO₃)₂·3H₂O (3.5 wt.%), | | NM | NM | NM | 6.08 |

### EXAMPLES 31- 46

Examples 31-46 were prepared in the same manner as Examples 1-30, except that the silica sol dispersion was a mixture of NALCO 1115 and NALCO DVSZN004 at 3:7 weight ratio, and acidified to a pH of 1.5 with concentrated HNO₃. To the resulting silica sol dispersions, a desired amount(s) of (an) aqueous metal compound solution(s), (2 weight percent of Zn(OAc)₂·2H₂O, 2 weight percent of AgNO₃, 2 weight percent of CuSO₄·5H₂O, and/or 2 weight percent of Na₂B₄O₇·10H₂O) were subsequently added. The concentration of total dopant was kept constant at 3 weight percent with respect to the silica sol dispersion on of Examples 31-46.

The dopant and level for each Example 31-46 are reported below in Tables 3-6. The type and amount of metal cations added to the coating compositions for each of Examples 31-46 are reported in Tables 3 and 4. Examples 31-46 were prepared by coating the doped silica sol dispersions using a #12 wire-wound coating rod. The coatings were dried using a heat gun (Model HG-751, obtained from Master Appliance Corp., Racine, Wisconsin) before further curing in an oven at 120 °C for 10 min. The samples thus prepared were tested using the test methods described above and the results are reported below in Table 3 and 4 (below).

**TABLE 3**

| EXAMPLE | METAL COMPOUND (weight percent based on total metal compound + silica) | GROWTH (CFU/cm²) | | LOG REDUCTION of *Staphylococcus aureus* | |
|---|---|---|---|---|---|
| | | 1 hr | 24 hrs | 1 hr | 24 hrs |
| 31 | Zn(OAc)₂·2H₂O (3 wt.%) | 4.81 | 2.54 | 0.11 | 3.43 |
| 32 | Zn(OAc)₂·2H₂O (0.8 wt.%), Na₂B₄O₇·10H₂O (2.2 wt.%) | 4.83 | 4.60 | 0.09 | 1.37 |
| 33 | AgNO₃ (3 wt.%) | 4.48 | 0.49 | 0.44 | 5.48 |
| 34 | AgNO₃ (1 wt.%), Na₂B₄O₇·10H₂O (2.1 wt.%) | 4.69 | 0.49 | 0.22 | 5.48 |
| 35 | CuSO₄·5H₂O (3 wt.%) | 4.79 | 0.49 | 0.13 | 5.48 |
| 36 | CuSO₄·5H₂O (1.2 wt.%), Na₂B₄O₇·10H₂O (1.8 wt.%) | 4.85 | 0.49 | 0.06 | 5.48 |
| 37 | Zn(OAc)₂·2H₂O (0.4 wt.%), CuSO₄·5H₂O (0.4 wt.%), Na₂B₄O₇·10H₂O (2.2 wt.%) | 4.86 | 0.49 | 0.06 | 5.48 |
| 38 | AgN03 (0.6 wt.%), CuSO₄·5H₂O (0.6 wt.%), Na₂B₄O₇·10H₂O (1.8 wt.%) | 4.50 | 0.49 | 0.42 | 5.48 |

**TABLE 4**

| EXAMPLE | METAL COMPOUND (weight percent based on total metal compound + silica) | GROWTH (CFU/mL) | | LOG REDUCTION of *E. Coli* | |
|---|---|---|---|---|---|
| | | 1 hr | 24 hrs | 1hr | 24 hrs |
| 39 | Zn(OAc)₂·2H₂O (3 wt.%) | 4.73 | 3.71 | 0.10 | 2.63 |
| 40 | Zn(OAc)₂·2H₂O (0.8 wt.%), Na₂B₄O₇·10H₂O (2.2 wt.%) | 4.80 | 4.28 | 0.03 | 2.07 |
| 41 | AgNO₃ (3 wt.%) | 3.07 | 0.49 | 1.75 | 5.85 |
| 42 | AgNO₃ (1 wt.%), Na₂B₄O₇·10H₂O (2.1 wt.%) | 2.86 | 0.49 | 1.96 | 5.85 |
| 43 | CuSO₄·5H₂O (3 wt.%) | 4.44 | 0.49 | 0.38 | 5.85 |
| 44 | CuSO₄·5H₂O(1.2 wt.%), Na₂B₄O₇·10H₂O (1.8 wt.%) | 4.74 | 0.49 | 0.08 | 5.85 |
| 45 | Zn(OAc)₂·2H₂O (0.4 wt.%), CuSO₄·5H₂O (0.4 wt.%), Na₂B₄O₇·10H₂O (2.2 wt.%) | 4.83 | 0.49 | 0.00 | 5.85 |
| 46 | AgNO₃ (0.6 wt.%), CuSO₄·5H₂O (0.6 wt.%), Na₂B₄O₇·10H₂O (1.8 wt.%) | 2.89 | 0.49 | 1.93 | 5.85 |

### EXAMPLES 47- 60

Example 47-60 were prepared in a similar manner as described for Example 1-30, except that the coatings were applied using a #12 wire-wound coating rod on either PET or glass slide (VWR Micro Slides obtained from VWR International, LLC, Radnor, Pennsylvania) substrates as summarized in Tables 5 and 6. The resulting coated samples were soaked in deionized water for 10 days at room temperature before testing them for their antimicrobial activities. The final coated and soaked samples were optically clear and transparent.

The samples thus prepared were tested using the test methods described above and the results are reported below in Tables 5 and 6. None of the samples tested showed the migration of the metal compounds according to the *KIRBY-BAUER TEST.*

**TABLE 5**

| EXAMPLE | COATING COMPOSITION | | LOG REDUCTION of *Staphylococcus aureus* at 24 hrs | PERCENTAGE REDUCTION |
|---|---|---|---|---|
| | Metal Compound (weight percent based on total metal compound + silica) | Substrate | | |
| 47 | AgNO₃ (2.5 wt.%) | PET | 4.42 | 99.996 |
| 48 | AgNO3 (5.0 wt.%) | PET | 3.62 | 99.976 |
| 49 | AgNO₃ (10 wt.%) | PET | 5.07 | 99.999 |
| 50 | AgNO₃ (10 wt.%) | Glass | 5.13 | 99.999 |
| 51 | Cu(NO₃)₂·3H₂O (5.0 wt.%) | PET | 3.85 | 99.986 |
| 52 | Cu(NO₃)₂·3H₂O (10 wt.%) | PET | 3.41 | 99.961 |
| 53 | Cu(NO₃)₂·3H₂O (10 wt.%) | Glass | 4.53 | 99.997 |

**TABLE 6**

| EXAMPLE | COATING COMPOSITION | | LOG REDUCTION *of Pseudomonas aeruginosa* at 24 hrs | PERCENTAGE REDUCTION |
|---|---|---|---|---|
| | Metal Compound (weight percent based on total metal compound + silica) | Substrate | | |
| 54 | AgNO₃ (2.5 wt.%) | PET | 6.15 | 99.9999 |
| 55 | AgNO₃ (5.0 wt.%) | PET | 5.64 | 99.9998 |
| 56 | AgNO₃ (10 wt.%) | PET | 5.85 | 99.9999 |
| 57 | AgNO₃ (10 wt.%) | Glass | 6.02 | 99.9999 |
| 58 | Cu(NO₃)₂·3H₂O (5.0 wt.%) | PET | 5.41 | 99.9996 |
| 59 | Cu(NO₃)₂·3H₂O (10 wt.%) | PET | 4.05 | 99.9912 |
| 60 | Cu(NO₃)₂·3H₂O (10 wt.%) | Glass | 5.22 | 99.9994 |

### TEST METHOD FOR X-RAY SCATTERING ANALYSIS

Reflection geometry data were collected in the form of a survey scan by use of a PANalytical Empyrean diffractometer, copper K_{α} radiation, and PIXcel detector registry of the scattered radiation. The diffractometer is fitted with variable incident beam slits and diffracted beam slits. The survey scan was conducted in a coupled continuous mode from 5 to 80 degrees (2θ) using a 0.04 degree step size and 1200 second dwell time. X-ray generator settings of 40 kV and 40 mA were employed.

### EXAMPLES 61 and 62

EXAMPLE 61 and 62 were prepared by coating metal-doped silica dispersions on soda-lime glass substrates (from Brin Northwestern Glass Company, Minneapolis, Minnesota) using a #6 wire-wound coating rod (nominal wet coating thickness = 14 microns). The metal-doped colloidal silica dispersions were prepared by diluting NALCO 1115 silica sol to 10 weight percent solids with deionized water, acidifying the diluted silica sol with concentrated HNO₃ to a pH of about 2-3, and then adding a desired amount of aqueous metal compound solutions (10 weight percent AgNO₃, Cu(NO₃)₂·3H₂O). The type and amount of metal cations added to the coating compositions for each of Examples 61 and 62 are reported in Table 7. The coated samples were then dried at room temperature, and then further cured at 120 °C for 10 min. The final coated samples were optically clear and transparent. The powders for analysis were collected by scraping the coating off from glass substrates. The samples thus prepared were analyzed according to the *TEST METHOD FOR X-RAY SCATTERING ANALYSIS* described above and the results are reported below in Table 7.

**TABLE 7**

| EXAMPLE | ADDED METAL COMPOUND | AMOUNT OF ADDED METAL COMPOUND AS WEIGHT PERCENT OF TOTAL SOLIDS | PHASE PRESENT |
|---|---|---|---|
| 61 | AgNO₃ | 5 | amorphous (major), crystalline sodium nitrate (minor) |
| 62 | Cu(NO₃)₂·3H₂O | 5 | amorphous |

Other modifications and variations to the present disclosure may be practiced by those of ordinary skill in the art, without departing from the spirit and scope of the present disclosure, which is more particularly set forth in the appended claims. It is understood that aspects of the various embodiments may be interchanged in whole or part or combined with other aspects of the various embodiments. All cited references, patents, or patent applications in the above application for letters patent are herein incorporated by reference in their entirety in a consistent manner. In the event of inconsistencies or contradictions between portions of the incorporated references and this application, the information in the preceding description shall control. The preceding description, given in order to enable one of ordinary skill in the art to practice the claimed disclosure, is not to be construed as limiting the scope of the disclosure, which is defined by the claims and all equivalents thereto.

## Claims

1. A method of making a coatable composition, the method comprising:
providing a first composition comprising spherical silica nanoparticles dispersed in an aqueous liquid vehicle, wherein the silica nanoparticles have a mean particle size of less than or equal to 45 nanometers, and wherein the first composition has a pH greater than 6;
acidifying the first composition to a pH of less than or equal to 4 using inorganic acid to provide a second composition; and
dissolving at least one metal compound in the second composition to provide the coatable composition, wherein said at least one metal compound comprises at least one of a silver compound, a zinc compound, or a copper compound; wherein said particle size is measured by means of transmission electron microscopy.

2. The method of claim 1, wherein said at least one metal compound comprises a zinc compound and at least one of a silver compound or a copper compound.

3. The method of claim 1, wherein the coatable composition is essentially free of organic non-volatile compounds.

4. A coatable composition made according to the method of claim 1.

5. Amethod of making an antimicrobial article, the method comprising steps:
a) providing a first composition comprising spherical silica nanoparticles dispersed in an aqueous liquid vehicle, wherein the silica nanoparticles have a particle size distribution with a mode having a mean particle size of less than or equal to 45 nanometers, and wherein the first composition has a pH greater than 6;
b) acidifying the first composition to a pH of less than or equal to 4 using inorganic acid to provide a second composition; and
c) dissolving at least one metal compound in the second composition to provide a coatable composition, wherein said at least one metal compound comprises at least one of a silver compound, a zinc compound, or a copper compound; and
d) coating a layer of the coatable composition onto a surface of a substrate; and
e) at least partially drying the layer of the coatable composition to form an antimicrobial layer disposed on the surface of the substrate; wherein said particle size is measured by means of transmission electron microscopy.

6. The method of claim 5, wherein said at least one metal compound comprises a zinc compound and at least one of a silver compound or a copper compound.

7. The method of claim 5, wherein the layer of the coatable composition is optically clear.

8. The method of claim 5, wherein the coatable composition is essentially free of organic non-volatile compounds.

9. An antimicrobial article made according to the method of claim 5.

10. An antimicrobial composition comprising an amorphous silica matrix containing metal cations; wherein the amorphous silica matrix comprises interconnected spherical silica nanoparticles having a particle size distribution with an average particle size of less than 10 nanometers; wherein a majority of the metal cations are individually disposed in the amorphous silica matrix; wherein the metal cations comprise at least one of silver cations, zinc cations, or copper cations; and wherein the metal cations comprise from 0.5 to 20 mole percent of the total combined moles of the metal cations and silicon in the amorphous antimicrobial composition; wherein said particle size is measured by means of transmission electron microscopy.

11. The antimicrobial composition of claim 10, wherein the antimicrobial composition is essentially free of organic non-volatile compounds.

12. An antimicrobial article comprising a layer of an amorphous antimicrobial composition disposed on a surface of a substrate, wherein the amorphous antimicrobial composition comprises a silica matrix containing metal cations, wherein the metal cations comprise at least one of silver cations, zinc cations, or copper cations, wherein the silica matrix comprises interconnected spherical silica nanoparticles having a particle size distribution with an average particle size of less than 10 nanometers, wherein the metal cations optionally comprise metal cations which have a charge of n+, wherein n represents an integer ≥ 2, wherein a majority of the metal cations are individually disposed in the silica matrix, and wherein the metal cations comprise from 0.5 to 20 mole percent of the total combined moles of the metal cations and silicon in the amorphous antimicrobial composition; wherein said particle size is measured by means of transmission electron microscopy.

13. The antimicrobial article of claim 12, wherein the substrate comprises at least one of glass or an organic polymer.

14. The antimicrobial article of claim 13, wherein the layer of the amorphous antimicrobial composition is optically clear.

15. The antimicrobial article of claim 13, wherein the layer of the amorphous antimicrobial composition is essentially free of organic non-volatile compounds.

## Patentansprüche

1. Verfahren zur Herstellung einer beschichtbaren Zusammensetzung, wobei das Verfahren Folgendes umfasst:
Bereitstellen einer ersten Zusammensetzung, die sphärische Siliciumdioxid-Nanoteilchen umfasst, die in einer wässrigen, flüssigen Trägersubstanz dispergiert sind, wobei die Siliciumdioxid-Nanoteilchen eine mittlere Teilchengröße von weniger als oder gleich 45 Nanometern aufweisen, und wobei die erste Zusammensetzung einen pH-Wert von mehr als 6 aufweist;
Säuern der ersten Zusammensetzung auf einen pH-Wert von weniger als oder gleich 4 mittels anorganischer Säure, um eine zweite Zusammensetzung bereitzustellen; und
Auflösen von mindestens einer Metallverbindung in der zweiten Zusammensetzung, um die beschichtbare Zusammensetzung bereitzustellen, wobei die mindestens eine Metallverbindung mindestens eine von einer Silberverbindung, einer Zinkverbindung oder einer Kupferverbindung umfasst; wobei die Teilchengröße mittels Transmissionselektronenmikroskopie gemessen wird.

2. Verfahren nach Anspruch 1, wobei die mindestens eine Metallverbindung eine Zinkverbindung und mindestens eine von einer Silberverbindung oder einer Kupferverbindung umfasst.

3. Verfahren nach Anspruch 1, wobei die beschichtbare Zusammensetzung im Wesentlichen frei von organischen nichtflüchtigen Verbindungen ist.

4. Beschichtbare Zusammensetzung, hergestellt nach dem Verfahren nach Anspruch 1.

5. Verfahren zur Herstellung eines antimikrobiellen Artikels, wobei das Verfahren die folgenden Schritte umfasst:
a) Bereitstellen einer ersten Zusammensetzung, die sphärische Siliciumdioxid-Nanoteilchen umfasst, die in einer wässrigen, flüssigen Trägersubstanz dispergiert sind, wobei die Siliciumdioxid-Nanoteilchen eine Teilchengrößenverteilung mit einem Modus mit einer mittleren Teilchengröße von weniger als oder gleich 45 Nanometern aufweisen, und wobei die erste Zusammensetzung einen pH-Wert von mehr als 6 aufweist;
b) Säuern der ersten Zusammensetzung auf einen pH-Wert von weniger als oder gleich 4 mittels anorganischer Säure, um eine zweite Zusammensetzung bereitzustellen; und
c) Auflösen von mindestens einer Metallverbindung in der zweiten Zusammensetzung, um eine beschichtbare Zusammensetzung bereitzustellen, wobei die mindestens eine Metallverbindung mindestens eine von einer Silberverbindung, einer Zinkverbindung oder einer Kupferverbindung umfasst; und
d) Auftragen einer Schicht der beschichtbaren Zusammensetzung auf eine Oberfläche eines Substrats; und
e) mindestens teilweises Trocknen der Schicht der beschichtbaren Zusammensetzung, um eine antimikrobielle Schicht zu bilden, die auf der Oberfläche des Substrats angeordnet ist; wobei die Teilchengröße mittels Transmissionselektronenmikroskopie gemessen wird.

6. Verfahren nach Anspruch 5, wobei die mindestens eine Metallverbindung eine Zinkverbindung und mindestens eine von einer Silberverbindung oder einer Kupferverbindung umfasst.

7. Verfahren nach Anspruch 5, wobei die Schicht der beschichtbaren Zusammensetzung optisch klar ist.

8. Verfahren nach Anspruch 5, wobei die beschichtbare Zusammensetzung im Wesentlichen frei von organischen nichtflüchtigen Verbindungen ist.

9. Antimikrobieller Artikel, hergestellt nach dem Verfahren nach Anspruch 5.

10. Antimikrobielle Zusammensetzung, umfassend eine amorphe SiliciumdioxidMatrix, die Metallkationen enthält; wobei die amorphe Siliciumdioxid-Matrix miteinander verbundene, sphärische Siliciumdioxid-Nanoteilchen umfasst, die eine Teilchengrößenverteilung mit einer durchschnittlichen Teilchengröße von weniger als 10 Nanometern aufweisen; wobei eine Mehrzahl der Metallkationen einzeln in der amorphen Siliciumdioxid-Matrix angeordnet ist; wobei die Metallkationen mindestens eines von Silberkationen, Zinkkationen oder Kupferkationen umfassen; und wobei die Metallkationen von 0,5 bis 20 Molprozent der gesamten kombinierten Mole der Metallkationen und des Siliciums in der amorphen antimikrobiellen Zusammensetzung umfassen; wobei die Teilchengröße mittels Transmissionselektronenmikroskopie gemessen wird.

11. Antimikrobielle Zusammensetzung nach Anspruch 10, wobei die antimikrobielle Zusammensetzung im Wesentlichen frei von organischen nichtflüchtigen Verbindungen ist.

12. Antimikrobieller Artikel, umfassend eine Schicht einer amorphen, antimikrobiellen Zusammensetzung, die auf einer Oberfläche eines Substrats angeordnet ist, wobei die amorphe, antimikrobielle Zusammensetzung eine Siliciumdioxid-Matrix umfasst, die Metallkationen enthält, wobei die Metallkationen mindestens eines von Silberkationen, Zinkkationen oder Kupferkationen umfassen, wobei die Siliciumdioxid-Matrix miteinander verbundene, sphärische Siliciumdioxid-Nanoteilchen umfasst, die eine Teilchengrößenverteilung mit einer durchschnittlichen Teilchengröße von weniger als 10 Nanometern aufweisen, wobei die Metallkationen wahlweise Metallkationen umfassen, die eine Ladung von n+ besitzen, wobei n für eine ganze Zahl ≥ 2 steht, wobei eine Mehrzahl der Metallkationen einzeln in der Siliciumdioxid-Matrix angeordnet ist, und wobei die Metallkationen von 0,5 bis 20 Molprozent der gesamten kombinierten Mole der Metallkationen und des Siliciums in der amorphen, antimikrobiellen Zusammensetzung umfassen; wobei die Teilchengröße mittels Transmissionselektronenmikroskopie gemessen wird.

13. Antimikrobieller Artikel nach Anspruch 12, wobei das Substrat mindestens eines von Glas oder einem organischen Polymer umfasst.

14. Antimikrobieller Artikel nach Anspruch 13, wobei die Schicht der amorphen, antimikrobiellen Zusammensetzung optisch klar ist.

15. Antimikrobieller Artikel nach Anspruch 13, wobei die Schicht der amorphen, antimikrobiellen Zusammensetzung im Wesentlichen frei von organischen nichtflüchtigen Verbindungen ist.

## Revendications

1. Procédé de fabrication d'une composition pouvant être revêtue, le procédé comprenant :
la fourniture d'une première composition comprenant des nanoparticules sphériques de silice dispersées dans un véhicule liquide aqueux, dans lequel les nanoparticules de silice ont une taille moyenne des particules inférieure ou égale à 45 nanomètres, et dans lequel la première composition a un pH supérieur à 6 ;
l'acidification de la première composition à un pH inférieur ou égal à 4 à l'aide d'un acide inorganique pour fournir une deuxième composition ; et
la dissolution d'au moins un composé métallique dans la deuxième composition pour fournir la composition pouvant être revêtue, dans lequel ledit au moins un composé métallique comprend au moins l'un parmi un composé d'argent, un composé de zinc ou un composé de cuivre ; dans lequel ladite taille de particules est mesurée au moyen d'une microscopie électronique à transmission.

2. Procédé selon la revendication 1, dans lequel ledit au moins un composé métallique comprend un composé de zinc et au moins l'un parmi un composé d'argent ou un composé de cuivre.

3. Procédé selon la revendication 1, dans lequel la composition pouvant être revêtue est pratiquement exempte de composés organiques non volatils.

4. Composition pouvant être revêtue fabriquée selon le procédé de la revendication 1.

5. Procédé de fabrication d'un article antimicrobien, le procédé comprenant les étapes de :
a) fourniture d'une première composition comprenant des nanoparticules sphériques de silice dispersées dans un véhicule liquide aqueux, dans lequel les nanoparticules de silice ont une distribution granulométrique avec un mode possédant une taille moyenne des particules inférieure ou égale à 45 nanomètres, et dans lequel la première composition a un pH supérieur à 6 ;
b) acidification de la première composition à un pH inférieur ou égal à 4 à l'aide d'un acide inorganique pour fournir une deuxième composition ; et
c) dissolution d'au moins un composé métallique dans la deuxième composition pour fournir une composition pouvant être revêtue, dans lequel ledit au moins un composé métallique comprend au moins l'un parmi un composé d'argent, un composé de zinc ou un composé de cuivre ; et
d) revêtement d'une couche de la composition pouvant être revêtue sur une surface d'un substrat ; et
e) séchage au moins partiel de la couche de la composition pouvant être revêtue pour former une couche antimicrobienne disposée sur la surface du substrat ; dans lequel ladite taille de particules est mesurée au moyen d'une microscopie électronique à transmission.

6. Procédé selon la revendication 5, dans lequel ledit au moins un composé métallique comprend un composé de zinc et au moins l'un parmi un composé d'argent ou un composé de cuivre.

7. Procédé selon la revendication 5, dans lequel la couche de la composition pouvant être revêtue est optiquement transparente.

8. Procédé selon la revendication 5, dans lequel la composition pouvant être revêtue est pratiquement exempte de composés organiques non volatils.

9. Article antimicrobien fabriqué selon le procédé de la revendication 5.

10. Composition antimicrobienne comprenant une matrice de silice amorphe contenant des cations métalliques ; dans laquelle la matrice de silice amorphe comprend des nanoparticules sphériques de silice interconnectées possédant une distribution granulométrique avec une taille moyenne de particules inférieure à 10 nanomètres ; dans laquelle une majorité des cations métalliques est individuellement disposée dans la matrice de silice amorphe ; dans laquelle les cations métalliques comprennent au moins l'un parmi des cations d'argent, des cations de zinc ou des cations de cuivre ; et dans laquelle les cations métalliques constituent de 0,5 à 20 pour cent molaires du nombre total combiné de moles des cations métalliques et du silicium dans la composition antimicrobienne amorphe ; dans laquelle ladite taille de particules est mesurée au moyen d'une microscopie électronique à transmission.

11. Composition antimicrobienne selon la revendication 10, où la composition antimicrobienne est pratiquement exempte de composés organiques non volatils.

12. Article antimicrobien comprenant une couche d'une composition antimicrobienne amorphe disposée sur une surface d'un substrat, dans lequel la composition antimicrobienne amorphe comprend une matrice de silice contenant des cations métalliques, dans lequel les cations métalliques comprennent au moins l'un parmi des cations d'argent, des cations de zinc ou des cations de cuivre, dans lequel la matrice de silice comprend des nanoparticules sphériques de silice interconnectées possédant une distribution granulométrique avec une taille moyenne de particules inférieure à 10 nanomètres, dans lequel les cations métalliques comprennent facultativement des cations métalliques qui ont une charge de n+, dans lequel n représente un nombre entier ≥ 2, dans lequel une majorité des cations métalliques est individuellement disposée dans la matrice de silice, et dans lequel les cations métalliques constituent de 0,5 à 20 pour cent molaires du nombre total combiné de moles des cations métalliques et du silicium dans la composition antimicrobienne amorphe ; dans lequel ladite taille de particules est mesurée au moyen d'une microscopie électronique à transmission.

13. Article antimicrobien selon la revendication 12, dans lequel le substrat comprend au moins l'un parmi du verre ou un polymère organique.

14. Article antimicrobien selon la revendication 13, dans lequel la couche de la composition antimicrobienne amorphe est optiquement transparente.

15. Article antimicrobien selon la revendication 13, dans lequel la couche de la composition antimicrobienne amorphe est pratiquement exempte de composés organiques non volatils.
